# EUROPEAN PATENT APPLICATION

(11) **EP 3 054 555 A2**
(43) Date of publication of application: **10.08.2016**
(21) Application number: 16154219.6
(22) Date of filing: 04.02.2016
(51) Int. Cl.: H02J 7/00

(54) **BATTERY PACK AND METHOD OF DRIVING THE SAME**

(30) Priority: 04.02.2015 KR 20150017310
(71) Applicant: Samsung SDI Co., Ltd., Yongin-si, Gyeonggi-do (KR)
(72) Inventor: KIM, Dong Rak, Gyeonggi-do (KR); PARK, Jeong Kurn, Gyeonggi-do (KR); SONG, In Seob, Gyeonggi-do (KR); SON, Cheol Gi, Gyeonggi-do (KR); YOO, Kwang Min, Gyeonggi-do (KR); DO, Hyun Jun, Gyeonggi-do (KR); KIM, Hwa Su, Gyeonggi-do (KR); PARK, Su Jun, Gyeonggi-do (KR); CHOI, Jong Rock, Gyeonggi-do (KR); KIM, Jun Young, Gyeonggi-do (KR)
(74) Representative: Mounteney, Simon James

(57) **Abstract**

A battery pack includes an internal battery, a measuring unit, and a power controller. The measuring unit measures one or more charge/discharge conditions of an external battery. The power controller is connected to the internal battery and controls output current levels and input current levels of the external battery and the internal battery based on the one or more charge/discharge conditions. The one or more charge/discharge conditions include a state of charge level of the external battery.

## Description

### BACKGROUND

### 1. Field

One or more embodiments of the invention relate to a battery pack and a method for driving a battery pack.

### 2. Description of the Related Art

An internal combustion engine causes pollution and noise. Consequently, other ways for driving a vehicle are being developed. One approach involves using a motor powered by a rechargeable battery.

### SUMMARY

The present invention sets out to provide a relatively low cost battery having a high output current level for securing sufficient capacity.

In accordance with one or more embodiments of the invention, a battery pack includes an internal battery; measuring logic to measure one or more charge/discharge conditions of an external battery; a power controller connected to the internal battery, the power controller to control output current levels and input current levels of the external battery and the internal battery based on the one or more charge/discharge conditions; and a first connector and a second connector electrically connected to the power controller, wherein the one or more charge/discharge conditions include a state of charge (SOC) level of the external battery and wherein the first connector is to connect the power controller and the external battery. The external battery may have a greater capacity than the internal battery, and an output current level of the external battery may have a maximum value less than an output current level of the internal battery.

The second connector may be connected to a load, when the SOC level of the external battery is higher than a predetermined SOC level, the power controller may control the output current level of the external battery to be no more than a first predetermined level, and when the SOC level of the external battery is no more than the predetermined SOC level, the power controller may control the output current level of the external battery to be no more than a second predetermined level lower than the first predetermined level.

The one or more charge/discharge conditions may include a current level for the load, when the SOC level of the external battery is higher than the predetermined SOC level and the current level is higher than the first predetermined level, the internal battery may be discharged, when the SOC level of the external battery is higher than the predetermined SOC level and the current level is no more than the first predetermined level, an input current level of the internal battery may be a third predetermined level, when the SOC level of the external battery is lower than the predetermined SOC level and the current level is higher than the second predetermined level, the internal battery may be discharged, and when the SOC level of the external battery is lower than the predetermined SOC level and the current level is no more than the second predetermined level, the input current level of the internal battery may be a fourth predetermined level higher than the third predetermined level.

The second connector may be connected to a charger, the one or more charge/discharge conditions may include a temperature of the external battery, when the SOC level of the external battery is higher than the predetermined SOC level or the temperature of the external battery is lower than a predetermined temperature, the internal battery may be charged, and when the SOC level of the external battery is no more than the predetermined SOC level or the temperature of the external battery is no less than the predetermined temperature, the external battery may be charged.

In accordance with one or more other embodiments of the invention, a method for driving a battery pack includes providing a battery pack including an internal battery and a power controller connected to the internal battery; connecting the power controller to an external battery through a first connector; measuring one or more charge/discharge conditions; and controlling the internal battery and the external battery based on the charge/discharge conditions, wherein controlling the internal battery and the external battery includes at least one of controlling discharge of the internal battery and the external battery, controlling output current levels of the internal battery and the external battery, controlling charge of the internal battery and the external battery, or controlling input current levels of the internal battery and the external battery is controlled.

The method may include connecting the power controller and a load through a second connector, wherein the one or more charge/discharge conditions include an SOC level of the external battery and a current level for the load, and wherein: when the SOC level of the external battery is higher than the predetermined SOC level and the current level for the load is higher than the first predetermined level, controlling at least one of the internal battery or the external battery in a first mode, when the SOC level of the external battery is higher than the predetermined SOC level and the current level is no more than the first predetermined level, controlling at least one of the internal battery or the external battery in a second mode, when the SOC level of the external battery is no more than the predetermined SOC level and the required current level is higher than the second predetermined level, controlling at least one of the internal battery or the external battery in a third mode, and when the SOC level of the external battery is no more than the predetermined SOC level and the required current level is no more than the second predetermined level, controlling at least one of the internal battery or the external battery in a fourth mode.

Controlling in the first mode may include controlling an output current level of the external battery to be the first predetermined level and discharging the internal battery, controlling in the second mode includes controlling the output current level of the external battery to be higher than the required current level and controlling an input current level of the internal battery to be a third predetermined level, controlling in the third mode includes controlling the output current level of the external battery to be the second predetermined level and discharging the internal battery, and controlling in the fourth mode includes controlling the output current level of the external battery to be higher than the current level and controlling the input current level of the internal battery to be a fourth predetermined level higher than the third predetermined level.

The method may include connecting the power controller to the charger through the second connector, wherein the one or more charge/discharge conditions include an SOC level of the external battery and a temperature of the external battery, and wherein: when the SOC level of the external battery is higher than the predetermined SOC level or the temperature of the external battery is lower than the predetermined temperature, controlling at least one of the internal battery or the external battery in a fifth mode , and when the SOC level of the external battery is no more than the predetermined SOC level and the temperature of the external battery is no less than the predetermined temperature, controlling at least one of the internal battery or the external battery in a sixth mode. Controlling in the fifth mode may include charging the internal battery is charged, and controlling in the sixth mode may include charging the external battery.

One or more other embodiments of the invention include an apparatus including a first interface; and a power controller connected to an external battery through the first interface, the power controller to control output current levels and input current levels of the external battery and an internal battery based on one or more charge/discharge conditions, wherein the one or more charge/discharge conditions include a state of charge (SOC) level of the external battery. The external battery may have a greater capacity than the internal battery, and an output current level of the external battery may have a maximum value less than an output current level of the internal battery.

The apparatus may include a second interface, wherein the power controller is connected to a load through the second interfaced and wherein: when the SOC level of the external battery is higher than a predetermined SOC level, the power controller is to control the output current level of the external battery to be no more than a first predetermined level, and when the SOC level of the external battery is no more than the predetermined SOC level, the power controller is to control the output current level of the external battery to be no more than a second predetermined level lower than the first predetermined level.

The one or more charge/discharge conditions may include a current level for the load, when the SOC level of the external battery is higher than the predetermined SOC level and current level is higher than the first predetermined level, the power controller may control discharging of the internal battery, when the SOC level of the external battery is higher than the predetermined SOC level and the current level is no more than the first predetermined level, an input current level of the internal battery may be a third predetermined level, when the SOC level of the external battery is lower than the predetermined SOC level and the current level is higher than the second predetermined level, the internal battery may be discharged, and when the SOC level of the external battery is lower than the predetermined SOC level and the current level is no more than the second predetermined level, the input current level of the internal battery may be a fourth predetermined level higher than the third predetermined level.

The apparatus may include a second interface, wherein the power controller is connected to a charger through the second interface, and wherein: the one or more charge/discharge conditions include a temperature of the external battery, when the SOC level of the external battery is higher than the predetermined SOC level or the temperature of the external battery is lower than a predetermined temperature, the internal battery is charged, and when the SOC level of the external battery is no more than the predetermined SOC level or the temperature of the external battery is no less than the predetermined temperature, the external battery is charged.

At least some of the above and other features of the invention are set out in the claims.

### BRIEF DESCRIPTION OF THE DRAWINGS

Features of the invention will be made more apparent to those of skill in the art by describing in detail embodiments thereof with reference to the attached drawings in which:
FIG. 1 illustrates an embodiment of a battery pack connected to a load;
FIG. 2 illustrates an embodiment of a battery pack connected to a charger;
FIG. 3 illustrates an embodiment of a method for driving a battery pack;
FIG. 4 illustrates an embodiment for controlling a battery pack; and
FIG. 5 illustrates an embodiment of an internal battery and an external battery.

### DETAILED DESCRIPTION

Example embodiments are described with reference to the accompanying drawings; however, the invention may be embodied in different forms and should not be construed as limited to the embodiments set forth herein. Rather, these embodiments are provided so that this disclosure will be thorough, and will convey implementations of the invention to those skilled in the art. The embodiments may be combined to form additional embodiments. Like reference numerals refer to like elements throughout.

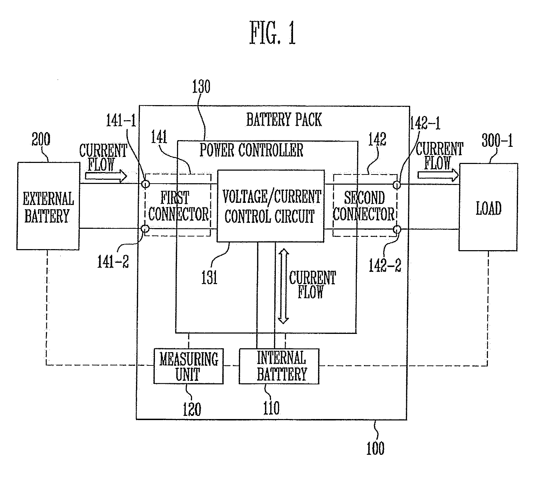

FIG. 1 illustrates an embodiment of a battery pack 100 connected to a load 300-1. The battery pack 100 includes an internal battery 110, a measuring unit 120, a power controller 130, a first connector 141, and a second connector 142. The load 300-1 is connected to the power controller 130 through the second connecting unit 142. The load 300-1 may be, for example, any one of a variety of forms of transportation, e.g., a vehicle, a forklift, etc.

The internal battery 110 is rechargeable and the measuring unit 120 measures charge/discharge conditions. The charge/discharge conditions may include a state of charge (SOC) level of an external battery 200 connected to the power controller 130 through the first connector 141. The SOC level may correspond to a ratio of an amount of charge left in a battery to a total amount of charge when charge is performed in a standard state. When the SOC level is 100%, a maximum SOC level is obtained. When the SOC level is 0%, a maximum discharge state is obtained. Since the load 300-1 is connected to the power controller 130 through the second connector 142, the charge/discharge conditions may further include a current level for the load 300-1.

The capacity of the external battery 200 may be larger than that of the internal battery 110, and the maximum value of an output current level of the external battery 200 may be less than that of an output current level of the internal battery 110. The external battery 200 may be rechargeable.

In the embodiment described with reference to FIG. 1, the measuring unit 120 directly measures an SOC level of the external battery 200. However, a current sensor may be connected to the external battery 200 for transmitting a signal corresponding to the SOC level to the measuring unit 120.

The power controller 130 is connected to and controls charging and discharging of the internal battery 110 and the external battery 200 based on the charge/discharge conditions. The power controller 130 includes a voltage/current control circuit 131. The voltage/current control circuit 131 controls an output current level of the internal battery 110 when the internal battery 110 is discharged, controls an input current level of the internal battery 110 when the internal battery 110 is charged, controls an output current level of the external battery 200 when the external battery 200 is discharged, and controls an input current level of the external battery 200 when the external battery 200 is charged. Voltage levels may be controlled while the current levels are controlled.

The first connector 141 and the second connector 142 are connected to the power controller 130. The first connector 141 includes a first terminal 141-1 and a second terminal 141-2. The second connector 142 includes a first terminal 142-1 and a second terminal 142-2.

Ends (a positive electrode and a negative electrode) of the external battery 200 are respectively connected to the first terminal 141-1 and the second terminal 141-2 of the first connector 141. Ends (a positive electrode and a negative electrode) of the load 300-1 are respectively connected to the first terminal 142-1 and the second terminal 142-2 of the second connector 142. In the embodiment of FIG. 1, each connector has two terminals. The connectors may have a different number of terminals in another embodiment.

When the power controller 130 is electrically connected to the load 300-1 through the second connector 142, the external battery 200 is discharged by the load 300-1 and the internal battery 110 may be charged or discharged.

The measuring unit 120 may measure the SOC level of the external battery 200 and a current level required by the load 300-1. The power controller 130 determines whether the SOC level of the external battery 200 is higher than a predetermined SOC level (for example, 50%).

When the SOC level of the external battery 200 is higher than the predetermined SOC level, it may be determined that the capacity of the external battery 200 is sufficient. Since the maximum value of the output current level of the external battery 200 is set to be high and a probability of rapidly discharging the internal battery 110 is low, the input current level of the internal battery 110 is set to be low. The voltage/current control circuit 131 performs control so that the output current level of the external battery 200 is no more than a first predetermined level (for example, 300A). When the current level required by the load 300-1 is higher than the first predetermined level, the output current level of the external battery 200 corresponds to the first predetermined level and the internal battery 110 is discharged by the load 300-1. When the current level required by the load 300-1 is no more than the first predetermined level, the voltage/current control circuit 131 controls so that the output current level of the external battery 200 is no less than a required current level and the input current level of the internal battery 110 becomes a third predetermined level (for example, 10A).

When the SOC level of the external battery 200 is no more than the predetermined SOC level, it may be determined that the capacity of the external battery 200 is not sufficient. Since the output current level of the external battery 200 is set to be low and a probability of rapidly discharging the internal battery 110 is high, the input current level of the internal battery 110 is set to be high. The voltage/current control circuit 131 performs control so that the output current level of the external battery 200 is no more than a second predetermined level (for example, 120A). The second predetermined level may be lower than the first predetermined level.

When the current level required by the load 300-1 is higher than the second predetermined level, the output current level of the external battery 200 corresponds to the second predetermined level and the internal battery 110 is discharged by the load 300-1. When the current level required by the load 300-1 is no more than the second predetermined level, the voltage/current control circuit 131 performs control so that the output current level of the external battery 200 is no less than the required current level and the input current level of the internal battery 110 becomes a fourth predetermined level (for example, 100A) higher than the third predetermined level.

The first to fourth predetermined levels may change based on a setting of the power controller 130. In addition, in one embodiment, the SOC level may be divided so that the maximum value of the output current level or the input current level may be controlled to be no less than three steps.

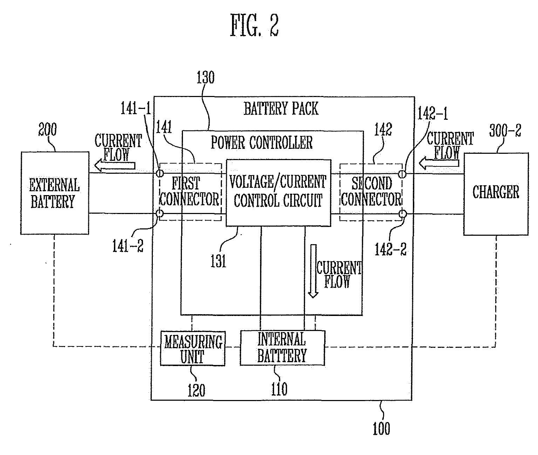

FIG. 2 illustrates an embodiment of the battery pack 100 connected a charger 300-2. Referring to FIGS. 1 and 2, the battery pack 100 includes the internal battery 110, the measuring unit 120, the power controller 130, the first connector 141, and the second connector 142. In the embodiment described with reference to FIG. 2, the charger 300-2 and the power controller 130 are electrically connected.

The internal battery 110 is rechargeable and the measuring unit 120 measures charge/discharge conditions. The charge/discharge conditions may include an SOC level of the external battery 200 connected to the power controller 130 through the first connector 141. Since the load 300-2 is connected to the power controller 130 through the second connector 142, the charge/discharge conditions may further include temperatures of the internal battery 110 and the external battery 200. In the embodiment of FIG. 2, the measuring unit 120 directly measures the temperature and the SOC level of the external battery 200. In another embodiment, a temperature sensor and a current sensor may be connected to the external battery 200 for transmitting one or more corresponding signals to the measuring unit 120.

The power controller 130 is electrically connected to the internal battery 110 and controls charge and discharge of the internal battery 110 and the external battery 200 based on the charge/discharge conditions. The power controller 130 includes the voltage/current control circuit 131. The voltage/current control circuit 131 controls an input current level of the internal battery 110 when the internal battery 110 is charged and controls an input current level of the external battery 200 when the external battery 200 is charged. Voltage levels may be controlled while the current levels are controlled.

The first connector 141 and the second connector 142 are connected to the power controller 130. The first connector 141 includes the first terminal 141-1 and the second terminal 141-2. The second connector 142 includes the first terminal 142-1 and the second terminal 142-2.

Ends (a positive electrode and a negative electrode) of the external battery 200 are respectively connected to the first terminal 141-1 and the second terminal 141-2. Two terminals in the charger 300-2 are respectively connected to the first terminal 142-1 and the second terminal 142-2. The charger 300-2 may output an alternating current (AC) power source. For example, the charger 300-2 may output an AC power source having a voltage level of 220V and a current level of 30A. In this case, the voltage/current control circuit 131 may convert the AC power source into a direct current (DC) power source.

When the power controller 130 is electrically connected to the charger 300-2 through the second connector 142, the internal battery 110 or the external battery 200 may be charged by the charger 300-2.

The measuring unit 120 may measure a temperature of the internal battery 110, the SOC level of the external battery 200, and a temperature of the external battery 200. The power controller 130 determines whether the SOC level of the external battery 200 is no less than a predetermined SOC level and whether the temperature of the external battery 200 is no more than a predetermined temperature.

When the SOC level of the external battery 200 is higher than the predetermined SOC level or the temperature of the external battery 200 is lower than the predetermined temperature, a charge characteristic of the external battery 200 or efficiency may deteriorate. Therefore, first, the internal battery 110 is charged until the SOC level thereof is no less than the predetermined SOC level. Then, the external battery 200 may be charged. When the SOC level is higher than the predetermined SOC level, the internal battery 110 or the external battery 200 may not be charged.

When the SOC level of the external battery 200 is no more than the predetermined SOC level and the temperature of the external battery 200 is higher than the predetermined temperature, the charge characteristic of the external battery 200 or efficiency does not deteriorate. Therefore, first, the external battery 200 is charged until the SOC level thereof is no less than the predetermined SOC level. Then, the internal battery 110 may be charged. When the SOC level is higher than the predetermined SOC level, the internal battery 110 or the external battery 200 may not be charged.

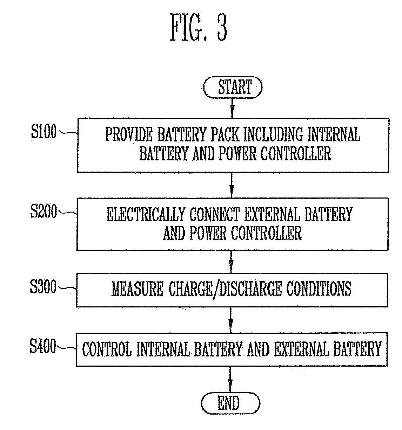

FIG. 3 illustrates an embodiment of a method for driving a battery pack, which, for example, may be battery pack 100. Hereinafter, description will be made with reference to FIGS. 1 to 3.

The method includes, in operation S110, providing the battery pack 100 including the internal battery 110, the measuring unit 120, the power controller 130, the first connector 141, and the second connector 142).

In operation S200, the external battery is electrically connected to the power controller through the first connector 141. Ends (the positive electrode and the negative electrode) of the external battery 200 are respectively connected to the first terminal 141-1 and the second terminal 141-2. In addition, the load 300-1 or the charger 300-2 is connected to the second connector 142. When the load 300-1 is connected to the power controller 130, the ends (the positive electrode and the negative electrode) of the load 300-1 are respectively connected to the first terminal 142-1 and the second terminal 142-2. When the charger 300-2 is connected to the power controller 130, the two terminals in the charger 300-2 are respectively connected to the first terminal 142-1 and the second terminal 142-2. When the charger 300-2 outputs AC power, the voltage/current control circuit 131 may convert the AC power from the charger 300-2 into DC power.

In operation S300, the measuring unit 120 measures the charge/discharge conditions. When the load 300-1 is electrically connected to the power controller 130, the charge/discharge conditions include the SOC level of the external battery 200 and the current level required by the load 300-1. When the charger 300-2 is electrically connected to the power controller 130, the charge/discharge conditions include the SOC level of the external battery 200 and the temperature of the external battery 200.

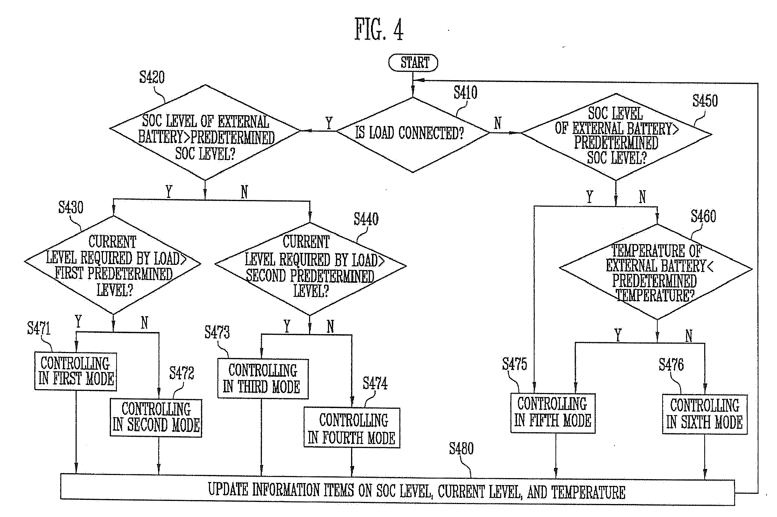

In operation S400, the power controller 130 controls the internal battery 110 and the external battery 200. A detailed control process will be described hereinafter with reference to FIG. 4.

FIG. 4 illustrates an embodiment of a control process for the battery pack driving method of FIG. 3. In operation S410, it is determined whether the load 300-1 is connected to the power controller 130. When it is determined that the load 300-1 is connected to the power controller 130, operation S420 is performed. When it is determined that the charger 300-2 is connected to the power controller 130, operation S450 is performed.

In operation S420, the SOC level of the external battery 200 is compared with the predetermined SOC level (for example, 50%). When the SOC level of the external battery 200 is higher than the predetermined SOC level, operation S430 is performed. When the SOC level of the external battery 200 is no more than the predetermined SOC level, operation S440 is performed.

In operation S430, the current level required by the load 300-1 is compared with the first predetermined level (for example, 300A). When the current level required by the load 300-1 is higher than the first predetermined level, control in a first mode in operation S471 is performed. When the current level required by the load 300-1 is no more than the first predetermined level, control in a second mode in operation S472 is performed.

In operation S440, the current level required by the load 300-1 is compared with the second predetermined level (for example, 120A). The second predetermined level may be lower than the first predetermined level. When the current level required by the load 300-1 is higher than the second predetermined level, control in a third mode in operation S473 is performed. When the current level required by the load 300-1 is no more than the second predetermined level, control in a fourth mode in operation S474 is performed.

In operation S450, the SOC level of the external battery 200 is compared with the predetermined SOC level. The predetermined SOC level in the operation S450 may be different from the predetermined level in the operation S420. When the SOC level of the external battery 200 is higher than the predetermined SOC level, control in a fifth mode in operation S475 is performed. When the SOC level of the external battery 200 is no more than the predetermined SOC level, operation S460 is performed.

In operation S460, the temperature of the external battery 200 is compared with the predetermined temperature. When the temperature of the external battery 200 is lower than the predetermined temperature, the charge characteristic of the external battery 200 or efficiency may deteriorate. Therefore, control in the fifth mode in operation S475 is performed. When the temperature of the external battery 200 is no less than the predetermined temperature, since the charge characteristic of the external battery 200 or efficiency does not deteriorate, control in a sixth mode in operation S476 is performed.

In performing control in the first mode in operation S471, since the SOC level of the external battery 200 is higher than the predetermined SOC level, it may be determined that the capacity of the external battery 200 is sufficient. The output current level of the external battery 200 is set to be high. The output current level of the internal battery 110 is controlled to be the first predetermined level. Since the current level required by the load 300-1 is higher than the first predetermined level, the internal battery 110 is discharged.

In performing control in the second mode in the operation S472, since the SOC level of the external battery 200 is higher than the predetermined SOC level, it may be determined that the capacity of the external battery 200 is sufficient. Since the probability of rapidly discharging the internal battery 110 is low, the input current level of the internal battery 110 is set to be low. The voltage/current control circuit 131 performs control so that the output current level of the external battery 200 is higher than the required current level and the input current level of the internal battery 110 becomes the third predetermined level (for example, 10A). In performing control in the first mode in operation S471 and in performing control in the second mode in the operation S472, the output current level of the external battery 200 is controlled to be no more than the first predetermined level.

In performing control in the third mode in the operation S473, since the SOC level of the external battery 200 is no more than the predetermined SOC level, it may be determined that the capacity of the external battery 200 is not sufficient. The output current level of the external battery 200 is set to be low. The output current level of the external battery 200 is controlled to be the second predetermined level lower than the first predetermined level and the internal battery 110 is discharged.

In performing control in the fourth mode in the operation S474, since the SOC level of the external battery 200 is no more than the predetermined SOC level, it may be determined that the capacity of the external battery 200 is not sufficient. Since the probability of rapidly discharging the internal battery 110 is high, the input current level of the internal battery 110 is set to be high. The voltage/current control circuit 131 performs control so that the output current level of the external battery 200 is no less than the required current level and the input current level of the internal battery 110 becomes the fourth predetermined level (for example, 100A) higher than the third predetermined level. In performing control in the third mode in operation S473 and in performing control in the fourth mode in operation S474, the output current level of the external battery 200 is controlled to be no more than the second predetermined level.

In performing control in the fifth mode in operation S475, since the SOC level of the external battery 200 is higher than the predetermined SOC level or the temperature of the external battery 200 is lower than the predetermined temperature, the charge characteristic of the external battery 200 or efficiency may deteriorate. Therefore, first, the internal battery 110 is charged until the SOC level thereof is no less than the predetermined SOC level. Then, the external battery 200 may be charged. When the SOC level is higher than the predetermined SOC level, the internal battery 110 or the external battery 200 may not be charged.

In performing control in the sixth mode in operation S476, since the SOC level of the external battery 200 is no more than the predetermined SOC level and the temperature of the external battery 200 is no less than the predetermined temperature, the charge characteristic of the external battery 200 or efficiency does not deteriorate. Therefore, first, the external battery 200 is charged until the SOC level thereof is no less than the predetermined SOC level. Then, the internal battery 110 may be charged. When the SOC level is higher than the predetermined SOC level, the internal battery 110 or the external battery 200 may not be charged.

After control is performed according to one of the first to sixth modes in operations S471 to S476, information items on the SOC level, the current level, and the temperature are updated in operation S480. In updating the information items on the SOC level, the current level, and the temperature in operations S480, the SOC level of the external battery 200, the current level required by the load 300-1, and the temperature of the external battery 200 are updated. When the power controller 130 is electrically connected to the load 300-1, the temperature information of the external battery 200 may not be updated. When the power controller 130 is electrically connected to the charger 300-2, the current level required by the load 300-1 may not be updated. After updating the information items on the SOC level, the current level, and the temperature in operation S480, operation S410 is performed again.

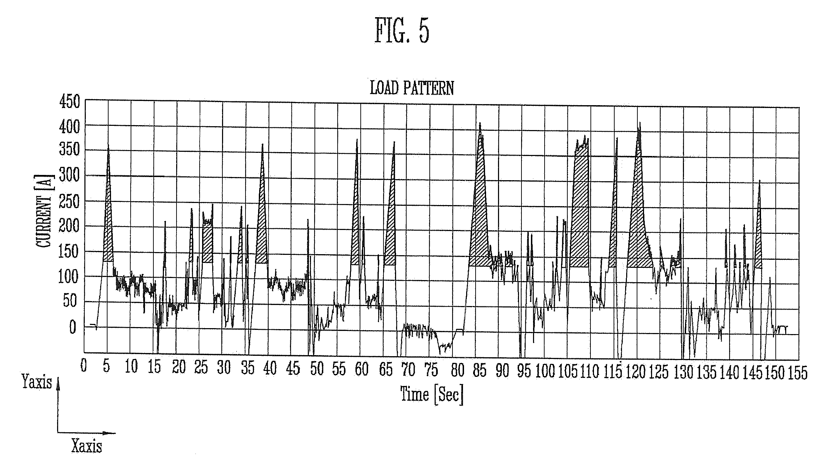

FIG. 5 is a graph illustrating an example for driving of internal battery and the external battery of FIG. 1. In FIG. 5, an X axis corresponds to time and a Y axis corresponds to current level. In addition, the solid line corresponds the current level required by the load 300-1. Regions marked with oblique lines corresponds to the output current level from the internal battery 110 to the load 300-1, and the remaining regions correspond to the output current level from the external battery 200 to the load 300-1.

Referring to FIG. 5, it is noted that the current output from the external battery 200 to the load 300-1 is controlled to be no more than a predetermined level (for example, 120A), and the internal battery 110 outputs current only in a partial period. When the current level required by the load 300-1 is larger than a predetermined level, the external battery 200 outputs a current by predetermined level and the internal battery 110 outputs a remaining current.

When the current level required by the load 300-1 is higher than the predetermined level, both the internal battery 110 and the external battery 200 output currents. When the current level required by the load 300-1 is no more than the predetermined level, only the external battery 200 outputs current. Since the external battery 200 only outputs current at no more than the predetermined level, a lifespan of the external battery 200 is not reduced. In FIG. 5, the input current level of the internal battery 110 is not displayed.

The rechargeable battery may be, for example, a lead storage battery or a lithium ion battery. The lead storage battery is low-priced and may secure a sufficient capacity. However, the output current level of the lead storage battery is low. Therefore, when the load instantaneously requires a high level current, it is difficult to cope with the requirement. The output current level of the lithium ion battery is high. However, the lithium ion battery is high-priced in comparison with a capacity.

The controller, measuring unit, and other processing features described herein may be implemented in logic which, for example, may include hardware, software, or both. When implemented at least partially in hardware, the controller, measuring unit, and other processing features may be, for example, any one of a variety of integrated circuits including but not limited to an application-specific integrated circuit, a field-programmable gate array, a combination of logic gates, a system-on-chip, a microprocessor, or another type of processing or control circuit.

When implemented in at least partially in software, the controller, measuring unit, and other processing features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the method embodiments may transform the computer, processor, controller, or other signal processing device into a special-purpose processor for performing the methods described herein.

The methods, processes, and/or operations described herein may be performed by code or instructions to be executed by a computer, processor, controller, or other signal processing device. The computer, processor, controller, or other signal processing device may be those described herein or one in addition to the elements described herein. Because the algorithms that form the basis of the methods (or operations of the computer, processor, controller, or other signal processing device) are described in detail, the code or instructions for implementing the operations of the method embodiments may transform the computer, processor, controller, or other signal processing device into a special-purpose processor for performing the methods described herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, controller, or other signal processing device which is to execute the code or instructions for performing the method embodiments described herein.

In accordance with one embodiment, an apparatus includes a power controller connected to an external battery through an interface. The power controller performs the operations of the power controller in connection with any of the aforementioned embodiments. For example, the power controller may control output current levels and input current levels of the external battery and an internal battery based on one or more charge/discharge conditions. The interface may be, for example, one or more output terminals, leads, wires, ports, signal lines, or other type of interface without or coupled to the power controller, for example, when the power controller is implemented as an integrated circuit chip.

In accordance with one or more of the aforementioned embodiments, it is possible to realize a low-priced battery having a high output current level for securing sufficient capacity.

Example embodiments of the invention have been disclosed herein, and although specific terms are employed, they are used and are to be interpreted in a generic and descriptive sense only and not for purpose of limitation. In some instances, as would be apparent to one of skill in the art as of the filing of the present application, features, characteristics, and/or elements described in connection with a particular embodiment may be used singly or in combination with features, characteristics, and/or elements described in connection with other embodiments unless otherwise indicated. Accordingly, it will be understood by those of skill in the art that various changes in form and details may be made without departing from the scope of the invention as set forth in the following claims.

## Claims

1. A battery pack, comprising:
an internal battery;
measuring logic to measure one or more charge/discharge conditions of an external battery;
a power controller connected to the internal battery, the power controller being adapted to control output current levels and input current levels of the external battery and the internal battery based on the one or more charge/discharge conditions; and
a first connector and a second connector electrically connected to the power controller, wherein the one or more charge/discharge conditions include a state of charge (SOC) level of the external battery and wherein the first connector is to connect the power controller and the external battery.

2. A battery pack as claimed in claim 1, wherein:
the external battery has a greater capacity than the internal battery, and
an output current level of the external battery has a maximum value less than an output current level of the internal battery.

3. A battery pack as claimed in claim 2, wherein:
the second connector is connected to a load,
when the SOC level of the external battery is higher than a predetermined SOC level, the power controller is adapted to control the output current level of the external battery to be no more than a first predetermined level, and
the power controller is adapted to control the output current level of the external battery to be no more than a second predetermined level lower than the first predetermined level when the SOC level of the external battery is no more than the predetermined SOC level.

4. A battery pack as claimed in claim 3, wherein:
the one or more charge/discharge conditions include a current level for the load, and the battery pack is adapted such that:
when the SOC level of the external battery is higher than the predetermined SOC level and the current level is higher than the first predetermined level, the internal battery is discharged,
when the SOC level of the external battery is higher than the predetermined SOC level and the current level is no more than the first predetermined level, an input current level of the internal battery is a third predetermined level,
when the SOC level of the external battery is lower than the predetermined SOC level and the current level is higher than the second predetermined level, the internal battery is discharged, and
when the SOC level of the external battery is lower than the predetermined SOC level and the current level is no more than the second predetermined level, the input current level of the internal battery is a fourth predetermined level higher than the third predetermined level.

5. A battery pack as claimed in one of claims 2 to 4, wherein:
the second connector is connected to a charger,
the one or more charge/discharge conditions include a temperature of the external battery, and the battery pack is adapted such that:
when the SOC level of the external battery is higher than a predetermined SOC level or the temperature of the external battery is lower than a predetermined temperature, the internal battery is charged, and
when the SOC level of the external battery is no more than the predetermined SOC level and the temperature of the external battery is no less than the predetermined temperature, the external battery is charged.

6. A method for driving a battery pack, the method comprising:
providing a battery pack including an internal battery and a power controller connected to the internal battery;
connecting the power controller to an external battery through a first connector;
measuring one or more charge/discharge conditions; and
controlling the internal battery and the external battery based on the charge/discharge conditions, wherein controlling the internal battery and the external battery includes at least one of controlling discharge of the internal battery and the external battery, controlling output current levels of the internal battery and the external battery, controlling charge of the internal battery and the external battery, or controlling input current levels of the internal battery and the external battery is controlled.

7. A method as claimed in claim 6, further comprising:
connecting the power controller and a load through a second connector, wherein the one or more charge/discharge conditions include an SOC level of the external battery and a current level for the load, and wherein:
when the SOC level of the external battery is higher than a predetermined SOC level and the current level for the load is higher than a first predetermined level, controlling at least one of the internal battery or the external battery in a first mode,
when the SOC level of the external battery is higher than the predetermined SOC level and the current level is no more than the first predetermined level, controlling at least one of the internal battery or the external battery in a second mode,
when the SOC level of the external battery is no more than the predetermined SOC level and the current level is higher than a second predetermined level, controlling at least one of the internal battery or the external battery in a third mode, and
when the SOC level of the external battery is no more than the predetermined SOC level and the current level is no more than the second predetermined level, controlling at least one of the internal battery or the external battery in a fourth mode.

8. A method as claimed in claim 7, wherein:
controlling in the first mode includes controlling an output current level of the external battery to be the first predetermined level and discharging the internal battery,
controlling in the second mode includes controlling the output current level of the external battery to be higher than the current level and controlling an input current level of the internal battery to be a third predetermined level,
controlling in the third mode includes controlling the output current level of the external battery to be the second predetermined level and discharging the internal battery, and
controlling in the fourth mode includes controlling the output current level of the external battery to be higher than the current level and controlling the input current level of the internal battery to be a fourth predetermined level higher than the third predetermined level.

9. A method as claimed in claim 6, 7 or 8, further comprising:
connecting the power controller to a charger through a second connector, wherein the one or more charge/discharge conditions include an SOC level of the external battery and a temperature of the external battery, and wherein:
when the SOC level of the external battery is higher than the predetermined SOC level or the temperature of the external battery is lower than a predetermined temperature, controlling at least one of the internal battery or the external battery in a fifth mode , and
when the SOC level of the external battery is no more than the predetermined SOC level and the temperature of the external battery is no less than the predetermined temperature, controlling at least one of the internal battery or the external battery in a sixth mode.

10. A method as claimed in claim 9, wherein:
controlling in the fifth mode includes charging the internal battery is charged, and
controlling in the sixth mode includes charging the external battery.

11. An apparatus, comprising:
a first interface; and
a power controller connected to an external battery through the first interface, the power controller being adapted to control output current levels and input current levels of the external battery and an internal battery based on one or more charge/discharge conditions, wherein the one or more charge/discharge conditions include a state of charge (SOC) level of the external battery.

12. A apparatus as claimed in claim 11, wherein:
the external battery has a greater capacity than the internal battery, and
an output current level of the external battery has a maximum value less than an output current level of the internal battery.

13. A apparatus as claimed in claim 12, further comprising:
a second interface,
wherein the power controller is connected to a load through the second interfaced and wherein the apparatus is adapted such that:
when the SOC level of the external battery is higher than a predetermined SOC level, the power controller is to control the output current level of the external battery to be no more than a first predetermined level, and
when the SOC level of the external battery is no more than the predetermined SOC level, the power controller is to control the output current level of the external battery to be no more than a second predetermined level lower than the first predetermined level.

14. A apparatus as claimed in claim 13, wherein:
the one or more charge/discharge conditions include a current level for the load, and that apparatus is adapted such that:
when the SOC level of the external battery is higher than the predetermined SOC level and current level is higher than the first predetermined level, the power controller is to control discharging of the internal battery,
when the SOC level of the external battery is higher than the predetermined SOC level and the current level is no more than the first predetermined level, an input current level of the internal battery is a third predetermined level,
when the SOC level of the external battery is lower than the predetermined SOC level and the current level is higher than the second predetermined level, the internal battery is discharged, and
when the SOC level of the external battery is lower than the predetermined SOC level and the current level is no more than the second predetermined level, the input current level of the internal battery is a fourth predetermined level higher than the third predetermined level.

15. A apparatus as claimed in one of claims 12 to 14, further comprising:
a second interface,
wherein the power controller is connected to a charger through the second interface, and wherein:
the one or more charge/discharge conditions include a temperature of the external battery, the apparatus being adapted such that:
when the SOC level of the external battery is higher than a predetermined SOC level or the temperature of the external battery is lower than a predetermined temperature, the internal battery is charged, and
when the SOC level of the external battery is no more than the predetermined SOC level or the temperature of the external battery is no less than the predetermined temperature, the external battery is charged.
